# EUROPEAN PATENT SPECIFICATION

(11) **EP 1 695 944 B1**
(45) Date of publication and mention of the grant of the patent: **09.04.2008**
(21) Application number: 06003681.1
(22) Date of filing: 23.02.2006
(51) Int. Cl.: C02F 11/08

(54) **Method and apparatus for wet oxidation of sludge**
Verfahren und Vorrichtung zur Nassoxidierung von Schlamm
Methode et dispositif d'oxydation de boue par voie humide

(30) Priority: 28.02.2005 IT MI20050306
(43) Date of publication of application: 30.08.2006
(73) Proprietor: 3V GREEN EAGLE S.P.A., 20121 Milano (IT)
(72) Inventor: Sardelli, Franco, 24127 Bergamo (IT)
(74) Representative: Alagem Modiano, Lara S.

(56) References cited:
- US-A- 5 540 847
- US-A- 5 720 578
- US-A- 5 820 761
- US-B1- 6 444 130

## Description

The present invention relates to a new method for the wet oxidation of sludge, particularly excess sludge produced by biological purification plants, and to an apparatus for carrying out the method.

Wet oxidation is a known process which, by means of oxygen dissolved directly in the liquid reaction phase, allows to break down and/or modify by oxidation the organic substances that are present in liquid waste (wastewater) or dense waste (sludge), provided that their consistency allows pumping so that they can be fed to the plant. The concentration of oxidizable species in wastewater can be expressed as COD (cumulative oxygen demand), which indicates the amount of oxygen in mg/l or kg/m³ of water required to completely break down the substances that are present.

Biological plants for purifying wastewater of industrial and civil origin produce, in their normal operation, an excess of suspended biomass, which is extracted systematically from the production cycle and is known as excess sludge. This sludge is characterized by the content of suspended solids (hereinafter SS), and by the content of volatile suspended solids (hereinafter VSS), which represent the fraction of SS which bums or vaporizes by heating in air the total suspended solids at 600°C and which is constituted substantially by the oxidizable organic substances and by water of crystallization of the inorganic compounds.

The content of volatile suspended solids of a biological excess sludge can be correlated to its COD value according to a correlation coefficient which varies from sludge to sludge but can be determined easily by a person skilled in the art. Therefore, given the content of VSS of a certain biological sludge, it is possible, if the correlation coefficient is known, to determine the COD value of said sludge.

Once extracted from the plant, the excess sludge is usually thickened, filtered or centrifuged. Only thickened sludge can be treated directly with wet oxidation, since it consists of dense liquids which however can still be pumped. Thickened sludge has a concentration of SS generally lower than 2.5-3.5% by weight on the total and a COD of 25-45 g/l.

The wet oxidation method is in itself exothermic, but in order to operate in industrially acceptable times, it is necessary to heat the wastewater, usually in one or two separate steps, in which for example the wastewater is brought initially to temperatures around 100°C and is then brought to a temperature generally ranging from 180°C to 260°C, a temperature at which the oxygen has a sufficiently high reactivity with respect to the wastewater.

Heating is conventionally provided by means of heat exchangers. Differently from aqueous wastewater, the sludge, especially if thickened, suffers the drawback of producing deposits on the surfaces of the heat exchangers designed to heat such sludge and rapidly cause them to lose effectiveness, forcing frequent cleaning with consequent financial expenditure and loss of plant efficiency. The problem is particularly severe in the heating step, in which the sludge is brought to the final operating temperature of the plant. Moreover, since the need for pumpability of the sludge forces treatment of sludge with a low COD content, the low exothermicity of the oxidation forces a substantial preheating, thus worsening the phenomenon of deposits.

An example of prior art wet oxidation is given by Stultz et al. (US 5 540 847).

As a consequence of what has been described above, the aim of the invention is to provide a method for wet oxidation of pumpable sludge, particularly excess sludge produced by biological purification plants, which overcomes the drawbacks of the background art.

One of the objects is to provide a method for wet oxidation of excess sludge without causing the problems of deposits in the heat exchangers.

Another object is to provide a method for wet oxidation of excess sludge which allows to reduce the amount of heat to be applied in the preheating step.

An object of the invention is to provide a method for wet oxidation of excess sludge which is economically advantageous with respect to existing technology.

Another object is to provide an apparatus particularly for providing a method for wet oxidation of sludge as defined above.

This aim and these and other objects which will become better apparent hereinafter, are achieved by a method for wet oxidation of sludge, particularly excess sludge produced by biological purification plants, which comprises at least one step of increasing the temperature of said sludge by using at least one injection of steam at high pressure, wherein the sludge has an SS content of less than 15% by weight on the total weight of the sludge and wherein the high-pressure steam has a pressure ranging from 18 to 85 bars and is in any case higher than the pressure at which wet oxidation occurs.

The aim and objects of the invention are also achieved by an apparatus for carrying out a method for wet oxidation of sludge, which comprises at least one oxidation reactor, means for pressurizing said sludge and feeding it to said reactor, means for adding oxygen inside said apparatus, characterized in that it comprises means for injecting steam which has a pressure ranging from 18 to 85 bars in at least one point inside said apparatus.

It is understood that any characteristic which is mentioned with regard to only one of the aspects of the invention but which can also refer to other aspects is to be considered equally valid as regards said other aspects even though it is not repeated explicitly.

In a first aspect, the invention relates to a wet oxidation method which is characterized, with respect to known methods, essentially by the partial or total replacement of the heat exchangers with one or more injections of heated steam, where at least one injection occurs with high-pressure steam. The complete replacement of the exchangers both in the preheating step and in the oxidation retention step allows to treat sludge without incurring problems of deposits on the exchangers. Moreover, since the invention makes it easy to treat sludge, such as thickened sludge, with high contents of SS, VSS and COD (maintaining the insurmountable limit of pumpability), it becomes less necessary to apply considerable heat in order to bring the sludge to the final operating temperature, further reducing drawbacks for the heat exchangers.

According to the invention, the temperature of the sludge is raised by means of at least one injection of steam at high pressure at a value ranging preferably from 180°C to 260°C. In the case of two or more injections, it is advantageous to combine injections of steam at low and high pressure. Particular preference is given to the embodiment in which there are two injections, the first one with low-pressure steam in order to preheat the sludge to temperatures ranging generally from 70°C to 120°C, and the second one with high-pressure steam in order to bring the sludge to a temperature ranging from 180°C to 260°C (operating temperature).

The low-pressure steam must be injected upstream of the pump which feeds the sludge to the reactor, has a pressure advantageously ranging from 0.1 bar to 15 bars, and a temperature ranging from 105°C to 200°C.

The high-pressure steam has a pressure which is higher than the operating pressure of the oxidation reactor and ranges from 18 to 85 bars, advantageously from 30 to 55 bars, and a temperature ranging from 210 °C to 300°C, preferably from 235°C to 270°C.

The at least one injection of high-pressure steam can occur prior the sludge is fed to the reactor and/or inside the reactor itself, i.e., both before and during oxidation. If a number of reactors are present in the apparatus, the steam at high pressure is injected at the latest in the first reactor.

The solution provided by the invention allows to process sludge which is more highly concentrated and has a higher COD than the conventional art, entailing an advantageous reduction in the amount of energy to be applied in order to achieve oxidation of the sludge in industrially useful times, all this without drawbacks for the heat exchangers. This last aspect is an economical improvement, since it reduces the maintenance costs of the plant.

In a preferred embodiment, the method according to the invention comprises the steps of:
a) providing an excess sludge characterized by an SS content of less than 15%, preferably ranging from 4% to 8% by weight on the total weight of the sludge;
b) preheating, at a pressure lower than 3 bars, preferably at ambient pressure, said sludge to a temperature ranging form 70°C to 140° C, preferably ranging from 80°C to 100°C, by using
   - at least one injection of low-pressure steam having a pressure ranging from 0.1 bar to 15 bars or
   - one or more heat exchangers;
c) raising the pressure of the sludge to a pressure ranging from 15 to 80 bars, advantageously ranging from 25 to 50 bars;
d) introducing in a wet oxidation reactor the preheated sludge under pressure, the oxygen required for oxidation of the sludge, and the high-pressure steam, and allowing the oxidation reaction to proceed until the selected reduction of COD is achieved.

It is highly advantageous for step b) to occur by using low-pressure steam, so as to eliminate completely the drawbacks of the use of heat exchangers.

If more than one reactor is used, the oxygen can be distributed among the various reactors. As an alternative to the direct injection of the high-pressure steam into the oxidation reactor, such steam can be introduced in the pipe for feeding the sludge to the reactor (i.e., between steps c) and d) described above).

Advantageously, the method entails, after step d), an additional step of:
e) recovering the effluent of step d) and separating it into a component which contains the solids and into a liquid component.

More advantageously, the method comprises, after step e), an additional step of:
f) washing with water, preferably with an alkaline aqueous solution, the solid component of the effluent recovered in step e).

The washing step is designed to remove from the effluent all the organic substances that have not been broken down completely but have been rendered water-soluble and might still accompany it, so as to render such effluent permanently inert. Complete inertization is advantageous in the prospect of disposing of the residue and in view of the legal constraints on the chemical and bacteriological quality of the residue to be disposed of.

If the initial sludge has an SS content of more than 12% by weight, the method comprises a step for diluting said sludge. In this case, the dilution can occur in a step a'), to be performed first prior to the other ones.

It is advantageous for the initial sludge to have an SS content ranging from 2% to 15% by weight on the total sludge. If the initial content of the sludge is lower than this range, the method can comprise a step a") of concentrating the sludge, to be performed prior to the others. This step can occur for example in sifters or settling tanks, optionally with the aid of flocculants and/or polyelectrolytes.

The terms "flocculants" and "polyelectrolytes" designate usually polymeric substances which are capable of producing coagulation, flocculation and settling of the sludge. Examples of flocculants are inorganic flocculants selected from iron chloride and sulphate, aluminum chloride, polychloride and sulphate, and mixtures thereof. Examples of polyelectrolytes are organic polyelectrolytes selected among polyols, polyesters, polyethers, polyacrylates and/or polyacrylamides, optionally substituted, and mixtures thereof.

In a second aspect, the invention relates to an apparatus for carrying out a method for wet oxidation of sludge, particularly excess sludge produced by biological purification plants. The apparatus is different with respect to conventional apparatuses because it is provided with means for injecting internally high-pressure steam, which replaces the heat exchangers that are usually used.

The apparatus according to the invention does not exclude the presence of conventional heat exchangers, which can still be present but are used exclusively during the preheating step (instead of the low-pressure steam). Preheating is in fact the step which entails less problems of deposits formation, because it is usually performed at low pressure (atmospheric pressure or a few bars), in lightweight apparatuses, which can be easily inspected and therefore cleaned at relatively low cost.

The reactor can be already provided with devices adapted to separate and remove the gaseous phase (gases produced by the reaction plus saturation steam) present in the reactor.

In an embodiment, the means for injecting steam comprise nozzles and at least one high-pressure steam generator (for example an evaporator).

In another embodiment, the apparatus further comprises also at least one preheating chamber, which is arranged in front of the reactor or reactors in which oxidation occurs and comprises means for injecting the steam at low pressure. The preheating chamber can be replaced with one or more exchangers.

Still in another embodiment, the apparatus further comprises also at least one expansion chamber, which is arranged downstream of the reactor or reactors and in which, due to the expansion of the effluent of the reactor, low-pressure steam is produced and is used advantageously to preheat the sludge. If the effluent of the reactor is a mixed phase (liquid, solid and gas), i.e., if separation of the gaseous phase does not occur in the reactor, the expansion chambers are at least two in number, at decreasing pressure, and the gaseous phase is removed in the first chamber while low-pressure steam is produced in the second chamber.

In an embodiment, the apparatus further comprises also at least one settling tank, which is arranged downstream of said reactor and said expansion chamber, if present.

Still in an embodiment, the apparatus further comprises also at least one scrubber which is arranged downstream of the settling tank.

Preferably, all the optional elements described above are present, since it is thus possible to recover and reuse the vapor phase of the expansion of the effluent as a source of the low-pressure steam to be injected.

The nozzles for injecting the steam at high pressure are preferably located at said at least one oxidation reactor, and if there are at least two reactors connected by suitable connectors, the nozzles must be arranged at the first of the various reactors.

As an alternative, the nozzles can be arranged on the pipe which feeds the sludge to the (first) reactor.

As mentioned, in an apparatus which comprises at least one preheating chamber, the nozzles for injecting steam at low pressure are located at said preheating chamber. As an alternative, the nozzles for the low-pressure steam can be arranged only, or also, on the pipe which feeds the sludge to said at least one preheating chamber.

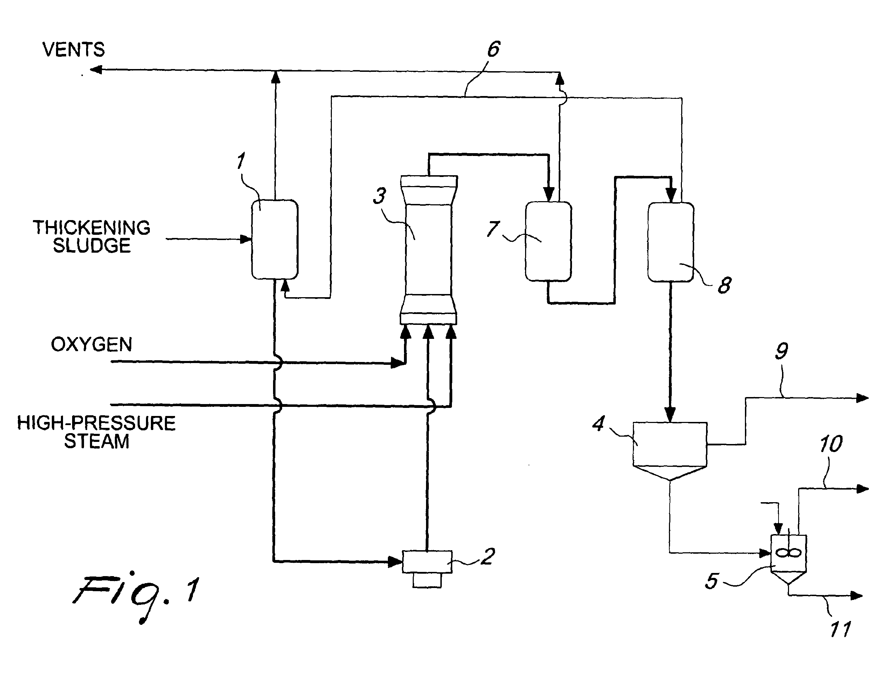

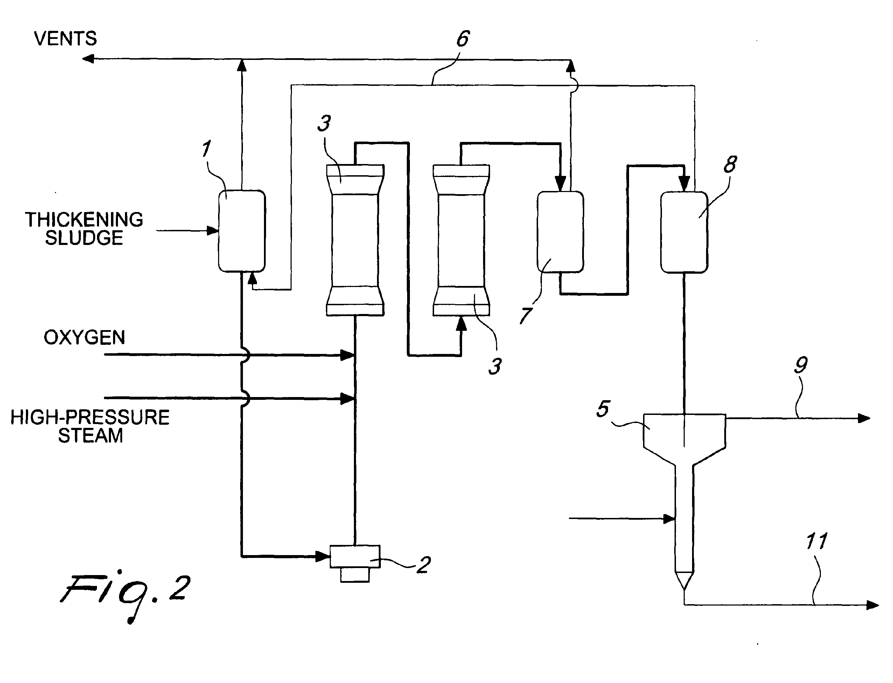

The invention is described by way of example with reference to Figures 1 and 2, which are two block diagrams of two preferred embodiments of the method, and wherein:
- the element 1 is a sludge preheating chamber, where the pressure is at ambient or slightly higher values (a few bars),
- the element 2 is a pump for pressurizing the preheated sludge,
- the element 3 is a wet oxidation reactor,
- the element 4 is a settling tank,
- the element 5 is the combination of another settling tank and of a scrubber,
- the element 6 is the line for recovering the low-pressure steam which conveys the steam formed in the expansion chambers 7 and 8 to the preheating unit 1,
- the element 7 is a first chamber for the expansion of the effluent of the reactor,
- the element 8 is a second expansion chamber for the effluent of the reactor,
- the element 9 is the line which conveys the component which contains the liquids of the oxidation effluent to the biological purification plant,
- the element 10 is the line which conveys the liquid component, obtained by scrubbing the component which contains the solids of the oxidation effluent, to the biological purification plant,
- the element 11 is the line for collecting the inertized solids obtained from wet oxidation of the sludge.

In the embodiment exemplified in Figure 1, the method according to the invention is provided with the aid of an apparatus which is constituted by a sludge preheater, in which, practically at atmospheric pressure, the fed sludge is heated to approximately 100°C by injecting steam recovered from the expansion of the liquid stream which flows out of the oxidation reactor. From the preheater, the sludge is collected by a pump and fed to a single reactor, which operates continuously and in which, together with the oxygen required to perform the actual oxidation, high-pressure steam (produced in an appropriately provided evaporator) is added, providing, by condensing, the heat required to preheat the sludge to the temperature required to have an industrially acceptable oxidation rate. The mixed phase (liquid, gas and powdery solid) which flows out of the reactor undergoes a first expansion at an intermediate pressure, in order to allow separation of the residual gases and of the excess generated steam, which are as much as possible condensed and discharged, and subsequently a second expansion at practically atmospheric pressure, in order to produce the steam required for the initial preheating of the sludge.

The liquid produced by this second expansion, together with the finely divided solid fraction that accompanies it, constitutes the effluent of the plant and is discharged. The separation of the aqueous phase from the suspended solids, which now are inorganic, is performed in a settling tank, for example of the type with laminas or of the conventional type, the supernatant whereof (aqueous solution) is recycled at the head of the biological plant, while the slurry drawn from the bottom is fed to two scrubbers (for example a mixer-settler with alternating operation), where the powders are washed by mixing with water (or water and sodium hydroxide), subsequent settling and removal of the supernatant liquid (this operation can be repeated several times).

In the embodiment exemplified in Figure 2, the method differs from the preceding one essentially in that the high-pressure steam is mixed with the preheated sludge before said sludge is introduced into the first of two reactors in series, which operate continuously and in the first of which (or in both of which, depending on the flow-rates and requirements) the oxygen required for the wet oxidation reaction is injected. As a further variation, washing with water (or sodium solution) can be performed directly in the appropriately shaped lower part of the settling tank.

Other characteristics and advantages of the present invention will become better apparent from the description of the following preferred embodiments, intended exclusively by way of non-limiting examples. Although the examples that follow and the text explicitly illustrate only some embodiments of the invention, the person skilled in the art will readily understand that it is possible to perform numerous other modifications to the method and apparatus described while maintaining the advantages shown.

### Example 1

A wet oxidation apparatus in which the excess sludge produced by the biological plant for purifying the wastewater of a chemical factory and various aqueous waste of external origin are treated with pure oxygen. The sludge is characterized by the following parameters:

| | | |
|---|---|---|
| SS | 2.8% = | 28000 mg/l |
| VSS/SS | | 0.85 |
| COD: | | 36000 mg/l |

The reaction parameters are:

| | |
|---|---|
| temperature: | 220-240°C, |
| pressure: | 40-50 bars. |

The plant operates with a reactor having an inside diameter of approximately 0.6 m and a height of approximately 5 m.

During normal operation, the reactor, which is kept at a pressure of 45 bars, is fed with 870 1/h of sludge as described above, preheated to 97°C by introducing in the preheating tank 130 kg/h of low-pressure steam (recovered from the atmospheric flash of the effluent of the reactor). 280 kg/h of steam, saturated at 55 bars, and oxygen in a stoichiometric quantity (approximately 30 kg/h) are also introduced in the reactor.

Due to the heat generated by the oxidation reaction and to the high-pressure steam that is introduced, the temperature of the reactor (head) rises to 240°C (which is also the output temperature from the reactor).

The effluent of the reactor (mixed phase) undergoes a first flash at a pressure of approximately 16 bars and 180°C, which allows to separate the reaction gases (carbon dioxide and oxygen) and the excess steam that is produced, and then undergoes a second flash at a pressure which is slightly higher than the atmospheric pressure (0.1-0.3 bars), producing the 130 kg/h of steam required to preheat the feed.

Approximately 940 1/h of wastewater having the following characteristics are obtained as liquid residue of the two subsequent flashes:

| | | |
|---|---|---|
| SS | 0.43% = | 4300 mg/l |
| VSS/SS | | 0.102 |
| COD: | | 11600 mg/l |

The resulting conversion (COD reduction) is higher than 65%. The reduction in total suspended solids is over 83% of the initial amount and the reduction in volatile suspended solids is approximately 98% of the initial amount. The suspended solids are very fine (maximum diameter approximately 50 microns; diameter 50 = 2.4-3.2 microns).

The wastewater that is produced is fed to a settling tank and separated into two fractions: a supernatant aqueous phase (approximately 900 1/h), which is recycled to the biological plant in order to be purified of the organic substance content, and a slurry, with approximately 10% suspended solids (approximately 40 1/h, SS = 10.2%).

The resulting slurry is accumulated on the bottom of the settling tank and is transferred every 4-6 hours into a conventional conical-cylindrical mixer-settler, where it is scrubbed repeatedly by mixing, subsequent settling and discharge of the supernatant, with alkaline solutions and neutral water until the mother liquor and the organic substances contained therein are removed completely. The discharged scrubbing wastewater is recycled to the biological plant in order to be purified of the organic substance content.

The scrubbed slurry is filtered on a filter press, obtaining panels with a dry substance content of approximately 50%.

The resulting panels have the following characteristics:

| | |
|---|---|
| Residue at 105°C (dry substance) | 48% |
| Residue at 600°C | 43.2% |
| Residue at 600°C (on dry substance) | 89.6% |

Analysis of the residue at 600°C:

| | |
|---|---|
| Aluminum | 11.1 mg/g of residue |
| Calcium | 306.2 mg/g of residue |
| Chromium | 1.9 mg/g of residue |
| Iron | 27.9 mg/g of residue |
| Phosphorus | 88.2 mg/g of residue |
| Magnesium | 38.7 mg/g of residue |
| Manganese | 2.4 mg/g of residue |
| Silicon | 25.4 mg/g of residue |
| Zinc | 3.6 mg/g of residue |
| Others (Ni, Pb, Cu), total | 2.4 mg/g of residue |

The panels are then dried in a drum dryer.

### Example 2

A wet oxidation plant in which the excess sludge produced by a biological plant for purifying municipal civil wastewater is treated with pure oxygen. The sludge is characterized by the following parameters:

| | | |
|---|---|---|
| SS | 2.5% = | 25000 mg/l |
| VSS/SS | | 0.76 |
| COD: | | 27000 mg/l |

The reaction parameters are:

| | |
|---|---|
| temperature: | 220-240°C, |
| pressure: | 40-50 bars. |

The plant operates with a reactor having an inside diameter of approximately 0 .6 m and a height of approximately 5 m.

During normal operation, 870 1/h of sludge as defined above, preheated to 97°C by introducing in the preheating tank 130 kg/h of low-pressure steam (recovered from the atmospheric flash of the effluent of the reactor) are fed to the reactor, which is kept at a pressure of 45 bars. 300 kg/h of saturated steam at 55 bars and oxygen in stoichiometric quantity (approximately 25 kg/h) are also introducing the reactor.

Due to the heat generated by the oxidation reaction and to the high-pressure steam introduced, the temperature of the reactor (head) rises to 240°C (which is also the output temperature from the reactor).

The effluent of the reactor (mixed phase) undergoes a first flash at the pressure of approximately 16 bars and 180°C, which allows to separate the reaction gases (carbon dioxide and oxygen) and the excess generated steam, and then a second flash at a pressure which is slightly higher than the atmospheric pressure (0.1-0.3 bars), which produces 130 kg/h of steam required to preheat the feed.

Approximately 960 1/h of wastewater having the following characteristics are obtained as a liquid residue of the two subsequent flashes:

| | | |
|---|---|---|
| SS | 0.58% = | 5800 mg/l |
| VSS/SS | | 0.0625 |
| COD: | | 8500 mg/l |

The resulting conversion (COD reduction) is higher than 65%. The reduction of the total suspended solids is 74.5% and the reduction of the volatile suspended solids is higher than 97.5%. The suspended solids are very fine (d.max = approximately 50 microns; d.50 = 2.8-3.2 microns).

The resulting wastewater is fed to a settling tank and separated into two fractions: an aqueous supernatant phase (approximately 900 1/h), which is recycled to the biological plant in order to be purified of the organic substance content, and a slurry with approximately 10% suspended solids (approximately 60 1/h, SS = 9.3%).

The resulting slurry accumulates on the bottom of the settling tank and is transferred every 4-6 hours into a conventional conical-cylindrical mixer-settler, where it is washed repeatedly by subsequent mixing, settling and discharge of the supernatant with alkaline solutions and water until the mother liquor and the organic substances contained therein are removed completely. The washed slurry is filtered in a filter press, obtaining panels with a dry substance content of approximately 50%.

The resulting panels have the following characteristics:

| | |
|---|---|
| Residue at 105°C (dry substance) | 46% |
| Residue at 600°C | 43.0% |
| Residue at 600°C (on dry substance) | 93.5% |

Analysis of the residue at 600°C:

| | |
|---|---|
| Aluminum | 14.4 mg/g of residue |
| Calcium | 293.3 mg/g of residue |
| Chromium | 1.7 mg/g of residue |
| Iron | 27.4 mg/g of residue |
| Phosphorus | 89.3 mg/g of residue |
| Magnesium | 25.5 mg/g of residue |
| Manganese | 1.1 mg/g of residue |
| Silicon | 28.1 mg/g of residue |
| Zinc | 4.6 mg/g of residue |
| Others (Ni, Pb, Cu), total | 2.4 mg/g of residue |

The panels are then dried in a drum dryer.

### Example 3.

A wet oxidation plant in which pure oxygen is used to treat the excess sludge produced by the plant for biological purification of the wastewater of a chemical factory and various aqueous waste of external origin. The sludge, before being fed to the wet oxidation, is thickened, by means of a sifter and with the addition of small amounts of polyelectrolyte, in order to bring the concentration of the suspended solids to approximately 6%. The sludge thus concentrated is characterized by the following parameters:

| | | |
|---|---|---|
| SS | 5.6% = | 56000 mg/l |
| VSS/SS | | 0.85 |
| COD: | | 72000 mg/l |

The reaction parameters are:

| | |
|---|---|
| temperature: | 220-240°C, |
| pressure: | 40-50 bars. |

The plant operates with a reactor having an inside diameter of approximately 0 .6 m and a height of approximately 5 m.

During normal operation, the reactor, kept at a pressure of 45 bars, is fed with 870 1/h of sludge as defined above, preheated to 97°C by introducing in the preheating tank 130 kg/h of low-pressure steam (recovered from the atmospheric flash of the effluent of the reactor). 200 kg/h of saturated steam at 55 bars and oxygen in a stoichiometric quantity (approximately 30 kg/h) are also introduced into the reactor.

Due to the heat generated by the oxidation reaction and to the high-pressure steam introduced, the temperature of the reactor (head) rises to 240°C (which is also the outflow temperature from the reactor).

The effluent of the reactor (mixed phase) undergoes a first flash at a pressure of approximately 16 bars and 180°C, which allows to separate the reaction gases (carbon dioxide and oxygen) and the excess generated steam, and then undergoes a second flash, at a pressure which is slightly higher than atmospheric pressure (0.1-0.3 bars), which produces the 130 kg/h of steam needed to preheat the feed. Approximately 880 1/h of wastewater with the following characteristics are obtained as liquid residue of the two subsequent flashes:

| | | |
|---|---|---|
| SS | 0.43% = | 4300 mg/l |
| VSS/SS | | 0.102 |
| COD: | | 11600 mg/l |

The resulting conversion (reduction of COD) is higher than 65%. The reduction in total suspended solids is higher than 83%, and the reduction in volatile suspended solids is approximately 98%. The suspended solids are very fine (d.max = approximately 50 microns; d.50 = 2.4-3.2 microns).

The resulting wastewater is fed to a settling tank and separated into two fractions: a supernatant aqueous phase (approximately 900 1/h), which is recycled to the biological plant in order to be purified of the organic substance content, and a slurry with approximately 10% suspended solids (approximately 401/h, SS = 10.2%).

The resulting slurry accumulates on the bottom of the settling tank and is transferred every 4-6 hours into a conventional conical-cylindrical mixer-settler, where it is scrubbed repeatedly by mixing, subsequent settling and discharge of the supernatant with alkaline solutions and water until the mother liquor is removed completely together with the organic substances contained therein. The discharged scrubbing wastewater is recycled to the biological plant to be purified of the organic substance content. The washed slurry is filtered on a filter press, obtaining panels with a dry substance content of approximately 50%. The resulting panels have the following characteristics:

| | |
|---|---|
| Residue at 105°C (dry substance) | 52% |
| Residue at 600°C | 46.7% |
| Residue at 600°C (on dry substance) | 89.8% |

Analysis of the residue at 600°C:

| | |
|---|---|
| Aluminum | 13.2 mg/g of residue |
| Calcium | 299.1 mg/g of residue |
| Chromium | 1.9 mg/g of residue |
| Iron | 32.5 mg/g of residue |
| Phosphorus | 94.9 mg/g of residue |
| Magnesium | 36.1 mg/g of residue |
| Manganese | 2.4 mg/g of residue |
| Silicon | 25.5 mg/g of residue |

| | |
|---|---|
| Zinc | 3.6 mg/g of residue |
| Others (Ni, Pb, Cu), total | 2.5 mg/g of residue |

The panels are then dried in a drum dryer.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for wet oxidation of sludge, comprising the steps of:
a) providing excess sludge produced by biological purification plants **characterized by** an SS content of less than 15%, preferably ranging from 4% to 8% by weight on the total weight of the sludge;
b) preheating, at a pressure below 3 bars, preferably at ambient pressure, said sludge to a temperature ranging from 70 to 140°C, preferably ranging from 80°C to 100°C, by using at least one injection of low-pressure steam which has a pressure ranging from 0.1 to 15 bars,
c) raising the pressure of the sludge to a pressure ranging from 15 to 80 bars;
d) introducing in a reactor for wet oxidation the preheated and pressurized sludge, the oxygen required for oxidation of the sludge, and high-pressure steam, and leaving the oxidation reaction to proceed until the required reduction of COD is achieved,
wherein high-pressure steam is introduced to increase the temperature of said sludge by using at least one injection, and wherein the high-pressure steam has a pressure which is comprised between 18 and 85 bars and is in any case higher than the pressure at which the wet oxidation occurs.

2. The method according to claim 1, comprising, after step d), an additional step of:
e) recovering the effluent of step d) and separating it into a component which contains the solids and into a component which contains the liquids.

3. The method according to claim 2, comprising, after step e), an additional step of:
f) scrubbing with water, preferably an alkaline aqueous solution, the component that contains the solids of the effluent recovered in step e).

4. The method according to claim 3, wherein the scrubbing step f) occurs with an alkaline aqueous solution.

5. The method according to any one of the preceding claims, wherein the SS content of the sludge ranges from 2% to 15% by weight on the total weight of the sludge.

6. The method according to any one of the preceding claims, wherein the sludge has an initial SS content of more than 12% by weight on the total weight of the sludge, and wherein the method comprises an additional step a') of diluting the sludge with water, and wherein said dilution step is to be performed as first step.

7. The method according to any one of claims 1 to 5, comprising a step a") for concentrating sludge, said step a") being performed before the others, optionally with the aid of flocculants and/or polyelectrolytes.

8. The method according to claim 7, wherein the flocculants and/or polyelectrolytes are usually polymeric substances capable of producing coagulation, flocculation and settling of the sludge.

9. The method according to any one of the preceding claims, wherein the high-pressure steam raises the temperature of the sludge to a value ranging from 180°C to 260°C.

10. The method according to any one of the preceding claims, comprising a single step of injecting steam at high pressure.

11. The method according to any one of the preceding claims, wherein the low-pressure steam is injected ahead of the pump which feeds the sludge to the reactor and has a pressure ranging advantageously from 0.1 to 15 bars and a temperature ranging from 105°C to 200°C.

12. The method according to any one of the preceding claims, wherein the high-pressure steam has a pressure which is higher than the operating pressure of the oxidation reactor and ranges from 18 to 85 bars, advantageously from 30 to 55 bars, and has a temperature ranging from 210°C to 300°C, preferably ranging from 235°C to 270°C.

13. An apparatus for carrying out a method for wet oxidation of sludge, comprising at least one oxidation reactor, a pump for pressurizing said sludge to a pressure ranging from 15 to 80 bars and feeding it to said reactor, means for adding oxygen inside said apparatus, **characterized in that:**
- it comprises means for injecting steam at a pressure ranging from 18 to 85 bars in at least one point inside said apparatus, and
- it comprises means for injecting low-pressure steam at a pressure ranging from 0.1 to 15 bars, said means being arranged upstream of said means for pressurizing said sludge.

14. The apparatus according to claim 13, **characterized in that** said means for injecting steam comprise nozzles and at least one high-pressure steam generator.

15. The apparatus according to one or more of claims 13 and 14, further **characterized in that** it comprises at least one preheating chamber which is arranged upstream of said at least one reactor and is connected thereto.

16. The apparatus according to one or more of claims 13 to 15, further **characterized in that** it comprises at least one expansion chamber which is arranged downstream of the at least one reactor.

17. The apparatus according to claim 16, further **characterized in that** it comprises at least one settling tank which is arranged downstream of said reactor and said at least one expansion chamber, if present.

18. The apparatus according to claim 17, further **characterized in that** it comprises at least one scrubber which is arranged downstream of said settling tank.

19. The apparatus according to claim 13, **characterized in that** it comprises all the elements of claims 14-18.

20. The apparatus according to claim 16, **characterized in that** the nozzles for injecting steam are arranged at at least one point selected between said at least one reactor and said means for feeding the sludge under pressure to said reactor.

21. The apparatus according to claims 15 and 13, **characterized in that** said means for injecting low-pressure steam are nozzles arranged at said at least one preheating chamber.

22. The apparatus according to claims 15 and 13, **characterized in that** said means for injecting low-pressure steam are nozzles arranged at means which feed said sludge to said preheating chamber.

## Patentansprüche

1. Ein Verfahren für die Nassoxidation von Schlamm, das folgende Schritte umfasst:
a) Bereitstellung von überschüssigem Schlamm, der durch biologische Kläranlagen erzeugt wird, **gekennzeichnet durch** einen Gehalt von suspendierten Schwebstoffen von weniger als 15%, vorzugsweise im Bereich von 4 Gewichtsprozent bis 8 Gewichtsprozent des Gesamtgewichts des Schlamms;
b) Vorerhitzung, bei einem Druck von weniger als 3 Bar, vorzugsweise bei Umgebungsdruck, des Schlamms auf eine Temperatur im Bereich von 70 bis 140°C, vorzugsweise im Bereich von 80°C bis 100°C, **durch** Verwendung mindestens einer Injektion von Niederdruckdampf, der einen Druck im Bereich von 0,1 bis 15 Bar hat,
c) Erhöhung des Drucks des Schlamms auf einen Druck im Bereich von 15 bis 80 Bar,
d) Einführen des vorerhitzten und unter Druck gesetzten Schlamms, des Sauerstoffs, der zur Oxidation des Schlamms benötigt wird, und von Hochdruckdampf in einen Reaktor zur Nassoxidation, und Stattfindenlassen der Oxidationsreaktion, bis die erforderliche Reduktion von COD erzielt wird,
worin **durch** Anwendung mindestens einer Injektion Hochdruckdampf eingeführt wird, um die Temperatur des Schlamms zu erhöhen, und worin der Hochdruckdampf einen Druck hat, der zwischen 18 und 85 Bar beträgt und in jedem Fall höher ist als der Druck, bei dem die Nassoxidation stattfindet.

2. Das Verfahren gemäß Anspruch 1, das nach Schritt d) einen zusätzlichen Schritt des Folgenden umfasst:
e) Wiedergewinnung des Abflusses von Schritt d) und Auftrennen desselben in einen Bestandteil, der die Feststoffe enthält, und einen Bestandteil, der die flüssigen Stoffe enthält.

3. Das Verfahren gemäß Anspruch 2, das nach Schritt e) einen zusätzlichen Schritt des Folgenden umfasst:
f) Waschen mit Wasser, vorzugsweise einer wässerigen alkalischen Lösung, des Bestandteils, der die Feststoffe des in Schritt e) wiedergewonnenen Abflusses enthält.

4. Das Verfahren gemäß Anspruch 3, worin der Waschschritt f) mit einer wässerigen alkalischen Lösung durchgeführt wird.

5. Das Verfahren gemäß irgendeinem der obigen Ansprüche, worin der Gehalt von suspendierten Schwebstoffen des Schlamms im Bereich von 2 Gewichtsprozent bis 15 Gewichtsprozent des Gesamtgewichts des Schlamms liegt.

6. Das Verfahren gemäß irgendeinem der obigen Ansprüche, worin der Schlamm einen ursprünglichen Gealt von suspendierten Schwebstoffen von mehr als 12 Gewichtsprozent des Gesamtgewichts des Schlamms hat und worin das Verfahren einen zusätzlichen Schritt a') des Verdünnens des Schlamms mit Wasser umfasst und worin der Verdünnungsschritt als erster Schritt durchzuführen ist.

7. Das Verfahren gemäß irgendeinem der Ansprüche 1 bis 5, das einen Schritt a'') des Konzentrierens des Schlamms umfasst, wobei der Schritt a") vor den anderen durchgeführt wird, wahlweise mit Hilfe von Flockungsmitteln und/oder Polyelektrolyten.

8. Das Verfahren gemäß Anspruch 7, worin die Flockungsmittel und/oder Polyelektrolyte normalerweise polymere Substanzen sind, die in der Lage sind, Koagulation, Ausflockung und Abscheidung des Schlamms zu verursachen.

9. Das Verfahren gemäß irgendeinem der obigen Ansprüche, worin der Hochdruckdampf die Temperatur des Schlamms auf einen Wert im Bereich von 180°C bis 260°C erhöht.

10. Das Verfahren gemäß irgendeinem der obigen Ansprüche, das einen einzigen Schritt des Injizierens von Dampf bei hohem Druck umfasst.

11. Das Verfahren gemäß irgendeinem der obigen Ansprüche, worin der Niederdruckdampf vor der Pumpe injiziert wird, die den Schlamm in den Reaktor einführt, und einen Druck im Bereich von vorteilhafterweise 0,1 bis 15 Bar und eine Temperatur im Bereich von 105°C bis 200°C hat.

12. Das Verfahren gemäß irgendeinem der obigen Ansprüche, worin der Hochdruckdampf einen Druck hat, der höher ist als der Arbeitsdruck des Oxidationsreaktors und im Bereich von 18 bis 85 Bar, vorteilhafterweise von 30 bis 55 Bar, liegt, und eine Temperatur im Bereich von 210°C bis 300°C, vorzugsweise im Bereich von 235°C bis 270°C.

13. Eine Vorrichtung zur Durchführung eines Verfahrens zur Nassoxidation von Schlamm, das Folgendes umfasst: mindestens einen Oxidationsreaktor, eine Pumpe, um den Schlamm auf einen Druck im Bereich von 15 bis 80 Bar mit Druck zu beaufschlagen und ihn dem Reaktor zuzuführen, ein Mittel, um in der Vorrichtung Sauerstoff hinzuzufügen, **dadurch gekennzeichnet, dass**:
- sie ein Mittel zur Injektion von Dampf mit einem Druck im Bereich von 18 bis 85 Bar in mindestens einem Punkt innerhalb der Vorrichtung umfasst, und
- sie ein Mittel zur Injektion von Niederdruckdampf mit einem Druck im Bereich von 0,1 bis 15 Bar umfasst, wobei das Mittel stromaufwärts des Mittels zur Druckbeaufschlagung des Schlamms angeordnet ist.

14. Die Vorrichtung gemäß Anspruch 13, **dadurch gekennzeichnet, dass** das Mittel zur Injektion von Dampf Düsen und mindestens einen Hochdruckdampfgenerator umfasst.

15. Die Vorrichtung gemäß einem oder mehreren der Ansprüche 13 und 14, weiter **dadurch gekennzeichnet, dass** sie mindestens eine Vorwärmekammer umfasst, die stromaufwärts des mindestens einen Reaktors angeordnet und damit verbunden ist.

16. Die Vorrichtung gemäß einem oder mehreren der Ansprüche 13 bis 15, weiter **dadurch gekennzeichnet, dass** sie mindestens eine Expansionskammer umfasst, welche stromabwärts des mindestens einen Reaktors angeordnet ist.

17. Die Vorrichtung gemäß Anspruch 16, weiter **dadurch gekennzeichnet, dass** sie mindestens einen Abscheidertank umfasst, der stromabwärts des Reaktors und, falls vorhanden, der mindestens einen Expansionskammer angeordnet ist.

18. Die Vorrichtung gemäß Anspruch 17, weiter **dadurch gekennzeichnet, dass** sie mindestens einen Wäscher umfasst, der stromabwärts des Abscheidertanks angeordnet ist.

19. Die Vorrichtung gemäß Anspruch 13, **dadurch gekennzeichnet, dass** sie alle Elemente der Ansprüche 14-18 umfasst.

20. Die Vorrichtung gemäß Anspruch 16, **dadurch gekennzeichnet, dass** die Düsen zur Injektion von Dampf an mindestens einem ausgewählten Punkt zwischen dem mindestens einen Reaktor und dem Mittel zum Einführen des Schlamms unter Druck in den Reaktor angeordnet sind.

21. Die Vorrichtung gemäß den Ansprüchen 15 und 13, **dadurch gekennzeichnet, dass** die Mittel zur Injektion von Niederdruckdampf Düsen sind, die an der mindestens einen Vorwärmekammer angeordnet sind.

22. Die Vorrichtung gemäß den Ansprüchen 15 und 13, **dadurch gekennzeichnet, dass** die Mittel zur Injektion von Niederdruckdampf Düsen sind, die an einem Mittel angeordnet sind, das den Schlamm in die Vorwärmekammer einführt.

## Revendications

1. Procédé pour l'oxydation de boue par voie humide, comprenant les étapes consistant à:
a) fournir de la boue en excès produite par des installations de dépuration biologique, **caractérisée par** une teneur en SS inférieure à 15%, de préférence comprise entre 4% et 8% en poids du poids total de la boue;
b) préchauffer, à une pression inférieure à 3 bars, de préférence à pression ambiante, ladite boue jusqu'à une température comprise entre 70°C et 140°C, de préférence comprise entre 80°C et 100°C, en utilisant au moins une injection de vapeur à basse-pression qui a une pression comprise entre 0,1 et 15 bars,
c) élever la pression de la boue jusqu'à une pression comprise entre 15 et 80 bars;
d) introduire dans un réacteur pour l'oxydation par voie humide la boue préchauffé et pressurisée, l'oxygène requis pour l'oxydation de la boue et de la vapeur à haute-pression et laisser la réaction d'oxydation procéder jusqu'à la réduction désirée du COD,
dans lequel la vapeur à haute-pression est introduite pour augmenter la température de ladite boue en utilisant au moins une injection, et dans lequel la vapeur à haute-pression présente une pression qui et comprise entre 18 et 85 bars et qui est dans touts les cas supérieure à la pression à laquelle l'oxydation par voie humide se produit.

2. Procédé selon la revendication 1, comprenant, après l'étape d), une étape supplémentaire consistant à:
e) récupérer l'effluent de l'étape d) et le séparer en un composant qui contient les solides et en un composant qui contient les liquides.

3. Procédé selon la revendication 2, comprenant, après l'étape e), une étape supplémentaire consistant à:
f) laver avec de l'eau, de préférence avec une solution aqueuse alcaline, le composant qui contient les solides de l'effluent récupéré dans l'étape e).

4. Procédé selon la revendication 3, dans laquelle le lavage de l'étape f) a lieu avec une solution aqueuse alcaline.

5. Procédé selon l'une quelconque des revendications précédentes, dans lequel la teneur en SS de la boue est comprise entre 2% et 15% en poids du poids total de la boue.

6. Procédé selon l'une quelconque des revendications précédentes, dans lequel la boue présente une teneur en SS initiale de plus de 12% en poids du poids total de la boue, et dans lequel le procédé comprend une étape supplémentaire a') consistant à diluer la boue avec de l'eau, et dans lequel ladite étape de dilution doit être exécutée comme la première étape.

7. Procédé selon l'une quelconque des revendications 1 à 5, comprenant une étape a") consistant à concentrer la boue, ladite étape a") étant exécutée avant les autres, de façon optionnelle avec l'aide de floculants et/ou de polyélectrolytes.

8. Procédé selon la revendication 7, dans lequel les floculants et/ou les polyélectrolytes sont habituellement des substances polymères capables de produire la coagulation, la floculation et la sédimentation de la boue.

9. Procédé selon l'une quelconque des revendications précédentes, dans lequel la vapeur à haute-pression élève la température de la boue à une valeur comprise entre 180°C et 260°C.

10. Procédé selon l'une quelconque des revendications précédentes, comprenant une seul étape d'injection de vapeur à haute-pression.

11. Procédé selon l'une quelconque des revendications précédentes, dans lequel la vapeur à basse-pression est injectée avant la pompe qui distribue la boue au réacteur et a une pression avantageusement comprise entre 0,1 et 15 bars et une température comprise entre 105°C et 200°C.

12. Procédé selon l'une quelconque des revendications précédentes, dans lequel la vapeur à haute-pression a une pression qui est supérieure à la pression d'opération du réacteur d'oxydation et est comprise entre 18 et 85 bars, avantageusement comprise entre 30 et 55 bars et a une température comprise entre 210°C et 300°C, de préférence comprise entre 235°C et 270°C.

13. Appareil pour réaliser un procédé d'oxydation de boue par voie humide, comprenant au moins un réacteur d'oxydation, une pompe pour pressuriser ladite boue jusqu'à une pression comprise entre 15 et 80 bars et pour la distribuer dans ledit réacteur, des moyens pour ajouter de l'oxygène à l'intérieur dudit appareil, **caractérisé en ce que**:
- il comprend des moyens pour injecter de la vapeur à une pression comprise entre 18 et 85 bars dans au moins un point à l'intérieur dudit appareil, et
- il comprend des moyens pour injecter de la vapeur à basse-pression à une pression comprise entre 0,1 et 15 bars, lesdits moyens étant agencés en amont desdits moyens pour pressuriser la boue.

14. Appareil selon la revendication 13, **caractérisé en ce que** lesdits moyens pour injecter la vapeur comprennent des buses et au moins un générateur de vapeur à haute-pression.

15. Appareil selon une ou plusieurs des revendications 13 et 14, **caractérisé en outre en ce qu'**il comprend au moins une chambre de préchauffage qui est agencée en amont dudit au moins un réacteur et qui est reliée à celui-ci.

16. Appareil selon une ou plusieurs des revendications 13 à 15, **caractérisé en outre en ce qu'**il comprend au moins une chambre d'expansion qui est agencée en aval dudit au moins un réacteur.

17. Appareil selon la revendication 16, **caractérisé en outre en ce qu'**il comprend au moins un réservoir de sédimentation qui est agencé en aval dudit réacteur et de ladite au moins une chambre d'expansion, si celle-ci est présente.

18. Appareil selon la revendication 17, **caractérisé en outre en ce qu'**il comprend au moins un laveur qui est agencé en aval dudit réservoir de sédimentation.

19. Appareil selon la revendication 13, **caractérisé en ce qu'**il comprend tous les éléments des revendications 14 à 18.

20. Appareil selon la revendication 16, **caractérisé en ce que** lesdites buses pour l'injection de vapeur sont agencés au niveau d'au moins un point sélectionné parmi ledit au moins un réacteur et lesdits moyens pour distribuer la boue sous pression audit réacteur.

21. Appareil selon les revendications 15 et 13, **caractérisé en ce que** lesdits moyens pour injecter la vapeur à basse-pression sont des buses agencées au niveau de ladite au moins une chambre de préchauffage.

22. Appareil selon les revendications 15 et 13, **caractérisé en ce que** lesdits moyens pour injecter la vapeur à basse-pression sont des buses agencées au niveau de moyens qui distribuent ladite boue à ladite chambre de préchauffage.
